# EUROPEAN PATENT SPECIFICATION

(11) **EP 0 687 875 B1**
(45) Date of publication and mention of the grant of the patent: **04.02.1998**
(21) Application number: 95105705.8
(22) Date of filing: 15.04.1995
(51) Int. Cl.: F25D 29/00, H01H 37/04

(54) **Refrigeration apparatus with explosion-proof thermostat**
Kühlgerät mit explosionssicheren Thermostaten
Appareil de refroidissement avec thermostat inexplosible

(30) Priority: 20.05.1994 IT PN940032
(43) Date of publication of application: 20.12.1995
(73) Proprietor: ELECTROLUX ZANUSSI ELETTRODOMESTICI S.p.A., 33170 Pordenone (IT)
(72) Inventor: Paroni, Luigi, I-33033 Codroipo (Udine) (IT); Pagnossin, Giuliano, I-33170 Pordenone (IT)
(74) Representative: Giugni, Valter

(56) References cited:
- DE-A- 3 032 864
- US-A- 4 626 821
- US-A- 4 926 654

## Description

The present invention refers to a refrigeration apparatus provided with at least a food storage compartment and a corresponding thermostat which is accessible by the atmosphere of such a food storage compartment and appropriately sealed so as to prevent possible leakages of the inflammable gas contained therein from spreading into the atmosphere of said food storage compartment.

For greater simplicity, the following description will refer to a refrigeration apparatus with a single food storage compartment, but it will be appreciated that the invention extends to also cover refrigeration apparatuses that are provided with several food storage compartments and related thermostats.

It is a largely known fact that the pressure exerted by the public opinion in favour of increasingly environment-friendly products, ie. products that must be environmentally sustainable even after they are discarded at the end of their life cycle, has had both directly and indirectly an impact on industry as a whole, inducing it to develop products that are capable of meeting such environment-oriented requirements to an ever greater extent. In this connection, a direct impact is unfolding through a clear trend which is discernible among consumers in general, who seem to increasingly favour so-called "ecological" or green products, putting environment-friendliness on top of their purchase criteria, as stimulated by press and advertising campaigns that are quite often made on purpose, ie. for reasons of self-interest. On the other hand, an indirect impact is being produced by the setting up and the imposition of a whole set of regulatory, manufacturing and product design obligations aiming at gradually marginalizing products that are not considered or perceived as being adequately ecological.

It is basically for this second reason that all types of refrigeration apparatuses making use of chlorofluorocarbons (CFCs) as blowing agents in their thermal insulation foams have been phased out, or are now being phased out, from production by the manufacturers in the most advanced countries of this world, while the public opinion is clearly showing a general sensitiveness for and interest in the purchase of refrigerators that do not contain chlorofluorocarbons at all, ie. not even as working fluids in the refrigeration circuit.

As a consequence, refrigeration appliances have been developed in which the refrigerant or working fluid is made up by a gas or a mixture of gases that do not feature any significant ozone-depletion potential. However, such gases have frequently the undesired characteristic of being inflammable, as for instance in the case of propane or butane.

In order to prevent any risk of explosion in the case of such gases leaking into the closed compartment containing the stored food, particular configurations have been proposed for the internal lighting lamp, which is accordingly provided with a special safety sheathing provision adapted to prevent the atmosphere surrounding the lamp, and possibly saturated with inflammable gas, from coming into contact with the glowing filament of the lamp, even if the latter should get broken accidentally, thereby neutralizing any risk of explosion.

However, it should be noticed here that also the bulb of the thermostat and the conduit that links said bulb to said thermostat are generally filled with gas containing chlorofluorocarbons, so that even there said CFC-containing gas is going to be replaced with alternative, environment-friendlier gases which may therefore be inflammable.

It has therefore been observed that, even in the case that the refrigeration circuits themselves are safely protected against the risk of their possible breakage giving rise to a leakage of inflammable gas, this would at least partly prove useless if a possibility of an infiltration of inflammable gas continues anyway to exist inside the food storage compartment, due to the fact that the gas contained in the circuit of the thermostat could possibly escape and break into the food storage compartment of the refrigerator.

However, this represents a hazard which is more theoretical than actual in its nature, since the amount of inflammable gas contained in the thermostat assembly is so low that it would never be able to give rise to an actual risk of explosion, even in the case that the whole of it escapes into the food storage compartment.

On the other hand, the fact should not be overlooked that the thermostat conceals a further source of danger, as represented by the fact that it contains electric switches and, as a consequence, if it becomes accessible by the atmosphere inside the food storage compartment, wherein said atmosphere would possibly be impregnated with inflammable gas, the risk of an explosion of said inflammable mixture being triggered by the thermostat switching means rises again.

It would therefore be desirable, and it is in fact a major purpose of the present invention, to provide a household-type refrigeration apparatus provided with at least a food storage compartment and a corresponding thermostat means filled with inflammable gas, wherein said thermostat means is protected against the risk of becoming a source capable of triggering the ignition and, hence, the explosion of an inflammable gas mixture possibly contained in the food storage compartment.

This and further aims are reached in a refrigeration apparatus according to claim 1. In this apparatus, the thermostat means is provided with a special air-tight enclosure as described in the various embodiments of the present invention which will be illustrated below by way of non-limiting examples with reference to the accompanying drawings, in which:
- Figures 1 and 1A are a side cross-section and a front view, respectively, of a thermostat means according to the present invention;
- Figure 2 is a side cross-section view of a first variant of a thermostat means according to the present invention;
- Figures 3 and 3A are a side cross-section and a front view, respectively, of a second variant of the thermostat means according to the present invention.

The present invention resides substantially in the provision of a type of thermostat which is made air-tight in its construction by means of appropriate inner linings, even through an appropriate sealing of the spaces occupied by electric terminals.

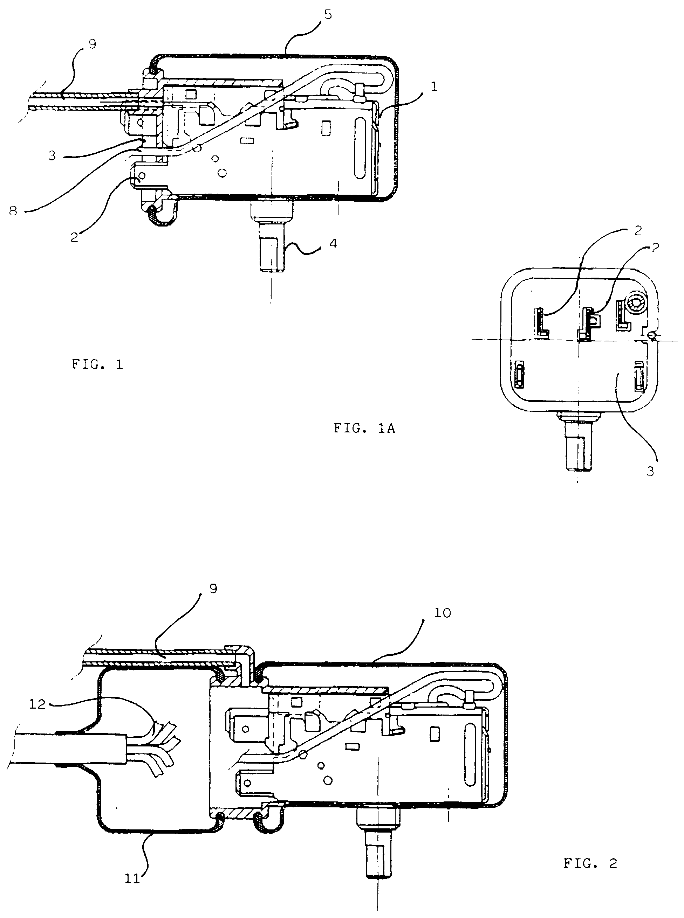

With reference to Figure 1, a first embodiment of the present invention is shown to result from the possibility of constructing the body 1 of the thermostat so that it is caused to have the electric terminals 2 arranged on a single, possibly flat side 3 thereof, whereas the remaining surface of the body is free from protrusions or similar hindrances of any kind, the only exception being constituted by an element 4 protruding from the body of the thermostat, said element being used as the means for adjusting the same thermostat.

This embodiment of the present invention calls for the body of the thermostat 1 to be sealed by means of an appropriate air-tight, elastic sheathing means 5 having substantially the same shape as the body of the thermostat and featuring an aperture on one of its sides. In a preferred manner, such a sheathing means is made of a silicone-based material and, furthermore, is provided with an aperture which will more closely described farther on.

Furthermore, the electric terminals which protrudes from said side 3 of the body of the thermostat are sealed on to said side, preferably by means of cast resin.

By applying this sheathing from its open side on to the body of the thermostat, said sheathing adheres to said body, thereby sealing it up completely. In addition, if the edge of the side 3 of the thermostat is so positioned as to correspond, ie. to fall in a line with the edge of said open side of the sheathing, and the protruding element 4 is in turn so positioned as to correspond with the aperture in said sheathing, the result is that the whole of said side 3 and the sheathing constitute a fully hermetic enclosure of the thermostat, due care having been taken in applying said sheathing in such a manner that the protruding element 4 gets inserted in the corresponding aperture, so that the elasticity of said sheathing ensures an air-tight sealing effect around the edge of said protruding element.

The tubing 8 of the bulb comes out of the body of said thermostat to be immediately embedded in the insulating mass and, therefore, does not give rise to any problem.

A thermostat has in this manner been provided which is fully protected against infiltrations of the surrounding atmosphere into the space reserved to its electric circuitry, is easy and practical to manufacture in a cost-effective way, and is simple to maintain in good order or, if needed, to repair.

It is of course also possible that a leakage occurs of the inflammable gas used within said thermostat as temperature sensing gas; if said thermostat had a traditionally open construction, the by all means negligible amount of the gas contained therein would, when dispersed inside the food storage compartment, prove absolutely inadequate to build up a concentration of inflammable gas that is likely to be ignited. However, the fact itself that said thermostat is given a hermetically sealed construction does not enable said gas to leak outside, so that, by remaining confined within the thermostat, it can actually build up to a dangerous concentration.

In view of preventing such a circumstance from occurring, a flexible conduit 9 is provided, of which one end is free, ie. opening into the atmosphere outside of the food storage compartment, while the other one is opening into said sealing enclosure of the thermostat, which enclosure is in turn sealed against the surface of said end portion. Such a construction ensures that inflammable gas possibly leaking inside the thermostat is able to easily and readily escape outside, thereby avoiding any risk of ignition and explosion inside the thermostat.

A variant of such an embodiment according to the present invention calls for the electric lead wires to be brought directly into the thermostat, thereby doing away with the use of external terminals, as this is shown in Figure 2.

In this case, the enclosure that seals the thermostat hermetically is divided in two portions, of which a first portion 10 encloses the body of the thermostat in the above described way, while a second portion 11 thereof hermetically encloses the passage of the electric lead wires 12 entering the thermostat.

Both said portions are elastic, and they are further capable of hermetically engaging each other along their respective edges, preferably by means of corresponding grooves and respective protruding ribs, which shall not be described here to any further detail since they are well within the capabilities of anyone skilled in the art.

Even in this case a flexible conduit 9 is of course provided, of which one end is free, ie. opening into the atmosphere outside of the food storage compartment, while the other one is opening into said sealing enclosure of the thermostat, which enclosure is in turn sealed against the surface of said end portion, so as to ensure that inflammable gas possibly leaking inside the thermostat is able to easily and readily escape outside, said flexible conduit being in this case capable of passing through either one of said hermetically sealing elastic portions.

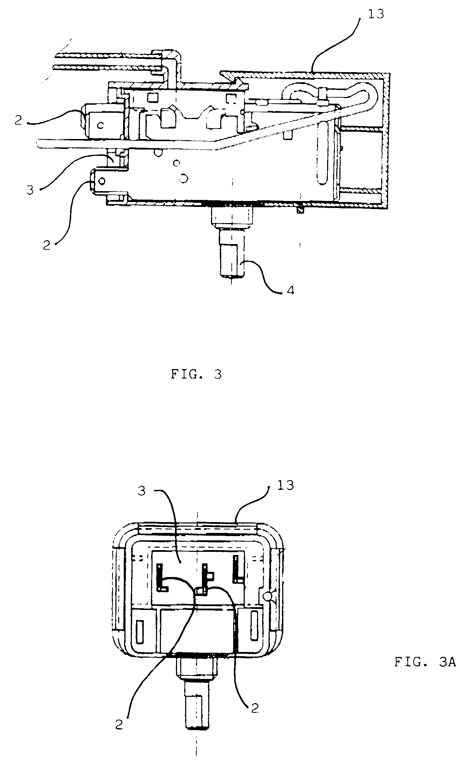

A second variant thereto is illustrated in Figure 3. This is actually a variant of the embodiment shown in Figure 1, from which it differs for the fact that, of said embodiment, it maintains the rigid side from which the electric terminals 2 protrude, whereas the elastic sheathing is replaced by a rigid half-shell enclosure 13 that encloses, together with said side 3, the body of the thermostat in a hermetic manner.

Said rigid half-shell enclosure 13 is closed with its edges against the corresponding edges of said side 3, so as to build an entire, hermetically sealing casing.

It will now be fully apparent that a thermostat can be provided in this way, which is fully safe in connection with both the problem of an ignition of the surrounding atmosphere, since the thermostat is completely isolated from said atmosphere, and the problem of an ignition of the gas used in the same thermostat, since the latter is provided with a channel allowing said gas to escape outside the food storage compartment.

## Claims

1. Refrigeration apparatus, in particular a household-type refrigerator or freezer, comprising one or more thermostats containing inflammable gases and a related conduit for their bulb, at least a compressor, a condenser, one or more evaporators associated to at least food storage compartment, said at least thermostat being accessible by the atmosphere of said at least one food storage compartment and being provided with an adjustment element (4) protruding from the body of the same thermostat, **characterized in that** the body (1) of said thermostat is enclosed in an air-tight sealing enclosure that is provided with an aperture for the passage of said adjustment element (4), wherein the port ion of said enclosure surrounding said aperture is applied hermetically against the corresponding portion of the thermostat body.

2. Refrigeration apparatus according to claim 1, **characterized in that** said enclosure consists of a rigid side (3) from which the terminals (2) for the electrical connections protrude, and an impermeable elastic sheath (5) that entirely encloses the remaining walls of said thermostat and is adapted to engage said rigid side along the edges thereof.

3. Refrigeration apparatus according to claim 2, **characterized in that** slits, through which said electric connection terminals (2) project outwards, are sealed with respect to said rigid side (3).

4. Refrigeration apparatus according to claim 2 or 3, **characterized in that** said impermeable sheath (5) is elastic and is provided with a closed-loop groove arranged in correspondence of the inner portion of its edge of engagement, said groove being adapted to elastically and hermetically snap fit against the outer edge of said rigid side (3).

5. Refrigeration apparatus according to claim 1, **characterized in that**
- the related electric wires (12) enter directly said thermostat;
- said thermostat is open on its side from which said electric wires come out thereof;
- said hermetic enclosure is made up by two distinct portions (10, 11), which are elastic and capable of fitting together, the first portion (10) enclosing the thermostat, except the side thereof from which said electric wire come out, and the second portion (11) enclosing said electric wires hermetically.

6. Refrigeration apparatus according to claim 2, **characterized in that** said impermeable elastic sheath (5) is replaced by a half-shell rigid casing (13), which is adapted to be closed hermetically against said rigid portion (3).

7. Refrigeration apparatus according to any of the preceding claims, **characterized in that** a flexible conduit (9) is provided connecting the inner space of said hermetic enclosure with the atmosphere outside the refrigeration apparatus.

## Patentansprüche

1. Kühlgerät, insbesondere Haushaltkühl- oder -gefrierschrank, umfassend einen oder mehrere Thermostat(e), welche(r) brennbare Gase sowie eine Verbindungsleitung zum Fühler enthält (enthalten), mindestens einen Kompressor, einen Kondensor, einen oder mehrere Verdampfer, der (die) zumidest einem Lebensmittel-Lagerfach zugeordnet ist (sind), wobei der mindestens eine Thermostat über die Atmosphäre des zumindestens einen Lebensmittel-Lagerfaches zugänglich und mit einem Einstellelement (4) versehen ist, welches aus dem Körper des Thermostates hervorsteht, **dadurch gekennzeichnet**, daß der Körper (1) des Thermostates in einer luftdichten Umhausung angeordnet ist, welche mit einer Öffnung zum Durchtritt des Einstellelementes (4) versehen ist, wobei der Bereich der Umhausung, welcher die Öffnung umgibt, gegenüber dem entsprechenden Bereich des Thermostatkörpers hermetisch abgedichtet ist.

2. Kühlgerät nach Anspruch 1, **dadurch gekennzeichnet**, daß die Umhausung eine starre Seite (3) besitzt, von welcher die Anschlüsse (2) für die elektrischen Verbindungen abgehen, sowie eine undurchlässige elastische Umhüllung (5), welche die gesamten übrigen Außenseiten des Thermostates umschließt und so gestaltet ist, daß sie die starre Seite entlang ihrer Kanten einbindet.

3. Kühlgerät nach Anspruch 2, **dadurch gekennzeichnet**, daß die Schlitze, durch welche die Anschlüsse (2) für die elektrischen Verbindungen herausgeführt sind, gegenüber der starren Seite (3) abgedichtet sind.

4. Kühlgerät nach den Ansprüchen 2 oder 3, **dadurch gekennzeichnet**, daß die undurchlässige Umhüllung (5) elastisch und mit einer geschlossenen Nut versehen ist, welche in Übereinstimmung mit dem inneren Bereich ihrer Eingriffskante angeordnet ist, wobei die Nut so gestaltet ist, daß sie elastisch und hermetisch auf die Außenkante der starren Seite (3) aufschnappt.

5. Kühlgerät nach Anspruch 1, **dadurch gekennzeichnet**,
- daß die angeschlossenen Elektroleitungen (12) in den Thermostat direkt eingeführt sind;
- daß der Thermostat an der Seite offen ist, an welcher die Elektroleitungen aus diesem austreten;
- daß die hermetische Umhausung zwei bestimmte Teile (10,11) umfaßt, welche elastisch sind und zueinander passen, wobei das erste Teil (10) den Thermostat, mit Ausnahme der Seite umhüllt, aus welcher die Elektroleitungen austreten, und das zweite Teil (11) die Elektroleitungen hermetisch einschließt.

6. Kühlgerät nach Anspruch 2, **dadurch gekennzeichnet**, daß die undurchlässige elastische Umhüllung (5) durch ein halbschalenförmiges starres Gehäuse (13) ersetzt ist, welches so gestaltet ist, daß es gegen die starre Seite (3) hermetisch abschließt.

7. Kühlgerät nach einem oder mehreren der vorhergehenden Ansprüche, **dadurch gekennzeichnet**, daß eine flexible Rohrleitung (9) vorgesehen ist, die den hermetisch abgeschlossenen Innenraum mit der Atmosphäre außerhalb des Kühlgerätes verbindet.

## Revendications

1. Appareil de refroidissement, en particulier un réfrigérateur ou un congélateur de type domestique, comprenant un ou plusieurs thermostat(s) contenant des gaz inflammables et un conduit approprié pour leur réservoir, au moins un compresseur, un condenseur, un ou plusieurs évaporateur(s) associé(s) à au moins un compartiment de stockage d'aliments, ledit au moins un thermostat étant accessible à l'atmosphère dudit au moins un compartiment de stockage d'aliment et étant pourvu d'un élément de réglage (4) faisant saillie du corps de ce thermostat, caractérisé en ce que le corps (1) dudit thermostat est renfermé dans une enceinte d'étanchéité à l'air qui est pourvue d'une ouverture destinée au passage dudit élément de réglage (4), dans lequel la partie de ladite enceinte entourant ladite ouverture est appliquée hermétiquement contre la partie correspondante du corps de thermostat.

2. Appareil de refroidissement selon la revendication 1, caractérisé en ce que ladite enceinte consiste en une face rigide (3) de laquelle font saillie les bornes (2) destinées aux connexions électriques, et une gaine élastique (5) imperméable qui renferme entièrement les parois restantes dudit thermostat et est adapté à s'engager contre ladite face rigide, le long de ses bords.

3. Appareil de refroidissement selon la revendication 2, caractérisé en ce que des fentes, de laquelle font saillie vers l'extérieur lesdites bornes de connexion électriques (2), sont isolées hermétiquement par rapport à ladite face rigide (3).

4. Appareil de refroidissement selon la revendication 2 ou 3, caractérisé en ce que ladite gaine imperméable (5) est élastique et est pourvue d'une rainure en boucle fermée agencée sur la partie intérieure de son bord d'engagement, ladite rainure étant adaptée à s'encliqueter élastiquement et hermétiquement contre le bord extérieur de ladite face rigide (3).

5. Appareil de refroidissement selon la revendication 1, caractérisé en ce que
- les fils électriques (12) correspondants entrent directement dans ledit thermostat;
- ledit thermostat est ouvert sur son côté d'où sortent lesdits fils électriques;
- ladite enceinte hermétique est constituée de deux parties (10, 11) distinctes, qui sont élastiques et en mesure de s'adapter ensemble, la première partie (10) renfermant le thermostat, sauf son côté d'où sort ledit fil électrique, et la deuxième partie renfermant hermétiquement lesdits fils électriques (11).

6. Appareil de refroidissement selon la revendication 2, caractérisé en ce que ladite gaine élastique (5) imperméable est remplacée par un boîtier rigide (13) à demi-enveloppe, qui est adapté à être fermé hermétiquement contre ladite partie rigide (3).

7. Appareil de refroidissement selon l'une quelconque des revendications précédentes, caractérisé en ce qu'un conduit flexible (9) est prévu, reliant l'espace intérieur de ladite enceinte hermétique à l'atmosphère se trouvant à l'extérieur de l'appareil de refroidissement.
